# EUROPEAN PATENT SPECIFICATION

(11) **EP 3 507 179 B1**
(45) Date of publication and mention of the grant of the patent: **20.05.2020**
(21) Application number: 17758181.6
(22) Date of filing: 30.08.2017
(51) Int. Cl.: B62K 25/02

(54) **BICYCLE WHEEL AXLE**
FAHRRADACHSE
ESSIEU DE ROUE DE BICYCLETTE

(30) Priority: 30.08.2016 EP 16186398
(43) Date of publication of application: 10.07.2019
(73) Proprietor: Belgian Cycling Factory NV, 3583 Beringen (BE); Sixty-Too, 2020 Antwerpen (BE)
(72) Inventor: DECKX, Jan, 2020 Antwerpen (BE)
(74) Representative: Brantsandpatents bvba
(86) International application number: PCT/EP2017/071719
(87) International publication number: WO 2018/041871

(56) References cited:
- EP-A1- 1 147 976
- TW-A- 200 838 761
- US-A1- 2015 054 254
- US-A1- 2016 039 491

## Description

The present invention relates to a bicycle frame comprising at least one fork with opposite first and second blades, a wheel hub received between the opposite first and second blades, which wheel hub comprises an axial duct for receiving a through axle in axial direction there through, wherein a first end part of the through axle is provided for connection to the first blade by means of a first fastening member, and a second end part of the through axle opposite the first end part is provided for connection to the second blade by means of a second fastening member, according to the preamble of the first claim.

Bicycles with a frame configured to provide an easy uncoupling of a rear wheel from the rear fork by permitting uncoupling of the rear wheel from a sprocket wheel mounted to the rear fork, are known.

Such a bicycle frame is for example disclosed in WO2016/083412. WO2016/083412 disloses a bicycle frame with a modular hub which extends axially between the first and the second rear fork blade according to the wheel's rotation axis, by means of the axially aligned sequential wheel hub unit and sprocket wheel hub unit, which together form the modular rear bicycle hub. The modular hub is designed in such a way that the wheel hub unit may be removed together with the wheel, separate from the sprocket wheel unit. While the rear wheel is being exchanged, the sprocket wheel unit remains attached to the sprocket wheel and to the bicycle frame. The sprocket wheel hub unit extends axially along the rotation axis from the first blade in the direction of the second blade and the wheel hub unit extends axially along the rotation axis from the sprocket wheel hub unit in the direction of the second blade. According to WO2016/083412 the modular bicycle hub may be fastened to the first blade by means of a screw connection, and to the second blade by means of a quick-release skewer. The quick-release skewer permits to establish the screw connection at the first blade by rotating the tie tod at one end against a retaining element which abuts agains the arm of the rear fork to move the first and second blade towards each other until a desired positioning and tensioning of the tie rod and wheel with respect to the first and second blade is achieved. At the opposite end of the tie rod is hinged a conventional lever with an eccentric tensioning element, which permits placing the tie rod under tension by inducing an axial movement along the wheel's rotation axis upon moving of the lever perpendicular to the axis of the tie rod, from a first non-tensioned position into a second tensioned position.

Quick-release skewers are generally known to the skilled person as a suitable mechanism for applying a required amount of tension to the wheel and removing a wheel the bicycle frame and replacing it without using tools, by opening and closing the cam lever of the skewer. The usual eccentric quick release systems provide for building up the clamping force, following presetting the clamping length by way of nut and stopper on a thread, by way of folding down an eccentric member. The clamping length is usually set by iteration until the applied clamping force corresponds to the intended clamping force when folding down the eccentric member. For resetting the eccentric member to the desired angular position, the eccentric member must then be folded down once again, i.e. the wheel must be released. These steps are time-consuming for those who wish to check the clamping force during a ride (e.g. prior to a downhill stretch). Additionally, care must always be taken to ensure that the mechanism is properly tightened. In eccentric quick release systems, the time factor may cause changes to the clamping length and thus to the clamping force.

US2016/0039491 discloses a bicycle equipped with disc brakes, whose wheels can easily and quickly be changed so that a cyclist taking part in a race can re-join the race in a few moments with a new wheel and the relative disc braking system in a desired working order. For the bicycle's rear wheel to be held in position, a tie-rod is provided, capable of extending through the through-holes made both in the enlarged free ends of the opposite arms of the bicycle's rear fork, through the hollow hub and through the brake disk. One end of the tie-rod is threaded to enable it to be screwed into a corresponding threaded hole in the enlarged free end of the arm of the relative fork. At the other end of the tie-rod, a conventional lever element is provided, with an eccentric tensioning element, which abuts against the arm of the fork when the lever element is forced into the fixed position of the wheel, consequently placing the tie-rod under tension.

US2015/0054254 which shows the preamble of claim 1, discloses a quick release mechanism for bicycles, comprising: a through axle extending in the axial direction; a clamping device at the first end of the through axle; and a fastener at a second end of the through axle. The clamping mechanism has a lever for applying the clamping force and a clamping sleeve where the transmitting section for transmitting the clamping force is provided. The transmitting section transmits the clamping force to an engaging section of the clamping device. The lever is disposed on the whole movable relative to the clamping device in the axial direction of the through axle and it can be moved outwardly in the axial direction of the through axle counter to the bias of a spring device from an engaging position to a rotary position in which an angular position of the lever is adjustable independently of the clamping state. The spring device acts as a biasing spring. The other end of the through axlde comprises a fastener with a cylindrical main body. A matching cylindrical accommodation with recesses for inserting the fastening units is used for fastener accommodations. After inserting the fastening units the main body with the through axle is rotated e.g. 90° so that the fastening units are supported at the fastener accommodations.

In order to remove the rear wheel from the fork, the lever is brought into the position that allows the tie-rod to be released using the eccentric shape of the tensioning section of the tie rod, the tie-rod is rotated about its axis so as to disengage its threaded end from the threaded hole of the fork. Then the tie-rod can merely be withdrawn to allow the wheel to be released by simply pulling it along the axis of the hub.

The inventor has analysed the problems occurring with the use of this kind of tie-rod, and has observed that establishing the connection and fastening of a tie-rod takes time. The reason is that the tie-rod when establishing or releasing the connection has to be rotated several times between a position in which no connection is established and a position in which one end of the tie rod is fastened by the threaded connection, and thereafter the lever of the tie rod has to be canted to tighten the eccentric tensioning member at the other end of the tie rod to fully fasten the axle and the wheel to the bicycle frame. Also in the non-connected state, the tie-rod may be completely removed from the fork, which complicates the reconnection. Additionally when used by unexperienced users or users with insufficient strength, there is on the one hand a risk of an insufficient or inappropriate tensioning of the tie rod which will put the use of the bike at risk, and on the other hand the risk to an exaggerated fastening and therewith the risk to damage the tie-rod as well as the wheel. This may entail serious risks upon subsequent use of the bike, but moreover may lead to damaging of the wheel and/or the bike's frame. Ensuring a constant degree of fastening in order to provide a constant and desired degree of tensioning applied to the tie rod and ensure prvoding a bicycle of a constant quality and performance, may require experience.

A reproducible degree of fastening of the tie rod is nevertheless desirable as it may affect the performance of the bicycle at the position of the wheel. This will be of particular importance in race competition, where the chances of a runner should not be jeopardized by a varying mechanical performance of the equipment.

There is thus a need for a device which permits to connect, fasten and tension a wheel to a bicycle frame in a reliable and reproducible manner, in the shortest possible time.

The present invention thus aims to provide a fastening tool which permits to connect and fasten a wheel to a bicycle frame in a reproducible and reliable manner, in the shortest possible time.

This may be achieved according to the present invention with a bicycle frame showing the technical features of the characterising portion of the first claim.

Thereto, the present invention relates to a bicycle frame comprising at least one fork with opposite first and second blades, a wheel hub received between the opposite first and second blades, which wheel hub comprises an axial duct for receiving a through axle in axial direction there through, wherein a first end part of the through axle is provided for connection to the first blade by means of a first fastening member, and a second end part of the through axle opposite the first end part is provided for connection to the second blade by means of a second fastening member. The bicycle frame of this invention is characterised in that the first fastening member comprises a releasable quick connect coupling, which quick connect coupling comprises an axially extending first insert part provided to be received in an axially extending inner duct of a second receptacle part, wherein the first insert part comprises a first positioning member which is arranged to engage a corresponding second positioning member of the second recpetacle part in an engaging position to provide an end position arranged to limit the extent of forward movement of the first insert part into the second receptacle part, wherein the second receptacle part further comprises clamping means for exerting a releasable clamping force to at least part of the circumference of the first insert part, wherein the first insert part and the second receptacle part are arranged to be assembled in axial direction of the through axle.

The present invention provides a bicycle frame at least one blade of which is provided with a connecting member which permits to releasably connect a through axle for a wheel and to establish the connection along the axial direction of the through axle and of the bicycle wheel. The fact that the connection between the insert part of the quick connect coupling and the receptacle part is established in axial direction of the fastening members of the first insert part and the second receptacle part of the coupling and in axial direction of the rotation axis, permits to minimise the risk to deforming the rotation axis when establishing the connection, for example due to torque or a too tight fastening. The present invention permits to establish the connection by a translational movement along the trough axle to engage the positioning members and activate the clamping force to th circumference of the through axle. A further rotational movement of the through axle to establish the connection is not required. This is an adavantage as it permits positioning a wheel using one single movement. The present invention also permits inserting a wheel between the blades of a fork in any desired direction, to establish the quick connect coupling by inserting the insert part in the receptacle part and the wheel exchange operation may then be finalised by tightening the other, opposite end part of the wheel rotation axle to the opposite fork.

The extent to which the insert part can be moved into and inserted into the second receptacle part is defined by the first and second positioning members which define the position of the insert part within the receptacle part in the connected state. As a result, once the connection of the through axle to the first blade has been established, and the degree of tightening of the through axle has been defined by the lever operated tensioning member connecting the through axle to the second blade, the same amount of tensioning may be restored every time again when releasing the quick connect coupling or when exchaning wheels, without requiring adjustment by the lever operated tensioning member. Also the distance between the end part of the rotation axle and the fork, or in other words any play between the wheel and the fork, may be determined in advance and will be reproducible when a wheel is being exchanged, as the insert part will always fit into the receptacle part in the same way. This is due to the fact that when establishing the connection, the act of rotating the through axle about its axis followed by tightening the connection of the eccentric tensioning member to tighten the connection to a desired extent can be dispensed with. Therefore a reproducible positioning and repositioning of a wheel within the bicycle frame may always be achieved.

Releasing of the clamping force will release the insert part and will permit removing the insert part from the inner duct of the receptacle part without requiring to operate the lever operated tensioning member. Releasing of the clamping force and thus of the quick connect coupling may be achieved using a conventional release mechanism considered suitable by the skilled person and may for example require a simple action of pushing a button, of hinging one or more levers which engage the outer surface of the second insert part, move a clamping ring of the first receptacle part or move a cam over an outer face of the receptable part to release the clamping force. This is an important advantage as removal of a wheel from the bicle frame may be achieved by a simple activation of a release mechanism, which does not affect the tensioning applied to the axle and does not require varying the tightening of the through axle to the fork using the lever operated eccentric tensioning mechanism. Vice versa mounting of a wheel only requires inserting of the first insert part into the second receptacle part up to the position where the positioning members engage each other and/or the clamping member and the clamping force is activated. Thereby, the step of adjusting the tightening of the through axle to the fork using the eccentric tightening mechanism can be dispensed with.

The quick connect coupling described above is suitable for use with a fork of the front wheel alone, with a fork of the rear wheel alone or with both. Whether the quick connect coupling is mounted to the left or right fork is irrelevant to the present invention, either of both may be chosen. This is an important advantage as it permits to use one single type of wheels as a front or a back wheel for a bicycle, and thus limits the variety of wheels that must be taken along in the equipment of for example a race competition. The quick connect coupling described above may be used to connect one end of the through axle to one blade of a fork, which is preferred, or it may be used to couple both opposite ends of the through axle to both opposite blades of a fork. In an altnernative embodiment, one end of the through axle is fastened to a blade of a fork on the bicycle frame by means of the quick connect coupling described above, whereas the other end of the through axle may be fastened to the opposite blade of the fork by means of a conventional lever operated eccentric tensioning or tightening member to permit applying a required amount of tension. Frequently used eccentric lever operated tensioning members include a threaded end part of the rotation axle and a nut, or so-called tie rods, with a lever operated cam assembly on the other end part of the rotation axle. The lever is rotated along a hinge connection to tighten an eccentric part of the cam and secure the wheel to the fork. However any other fastening members considered suitable by the skilled person may be used as well.

Thus in the bicyle frame of this invention, mounting of a wheel to the bicycle frame can be realised in a simple way by inserting a through axle in the axial bore of the wheel hub, positioning the wheel between the opposite blades of the bicycle's fork, inserting the insert member on an end part of the through axle in the inner duct of the receptacle part of the quick connect coupling mounted to the blade of a fork of the bicycle's frame, and moving the insert member in axial direction of the through axle and the wheel axis to a position where the positioning members of the insert member and receptacle part engage each other, the insert member cannot be further moved and the clamping mechanism is activated.

Not only does the bicycle frame of this invention permit to significantly reduce the number of manipulations to be carried out when mounting a wheel to the bicycle frame, also the risk to a misconnection may be reduced to a minimum and important time savings may be realised when exchanging wheels, which is of particular relevance in race competitions. Misconnection may for example be due to an insufficient tightening of the through axle.

In a preferred embodiment of this invention the first insert part has a circular cross section and the inner duct of the second receptacle part has a corresponding circular cross section, to facilitate insertion of the insert part in the duct independent of its orientation.

The invention is further elucidated in the appending figures and description of the figures.
Figure 1 shows a schematic view to a bicycle.
Figure 2 shows a schematic view to a wheel hub.
Figure 3a-f show different embodiments of quick connect couplings suitable fo use with this invention.
Figure 4 shows a detailed view to a blade having the connect coupling of this invention integrated therein.

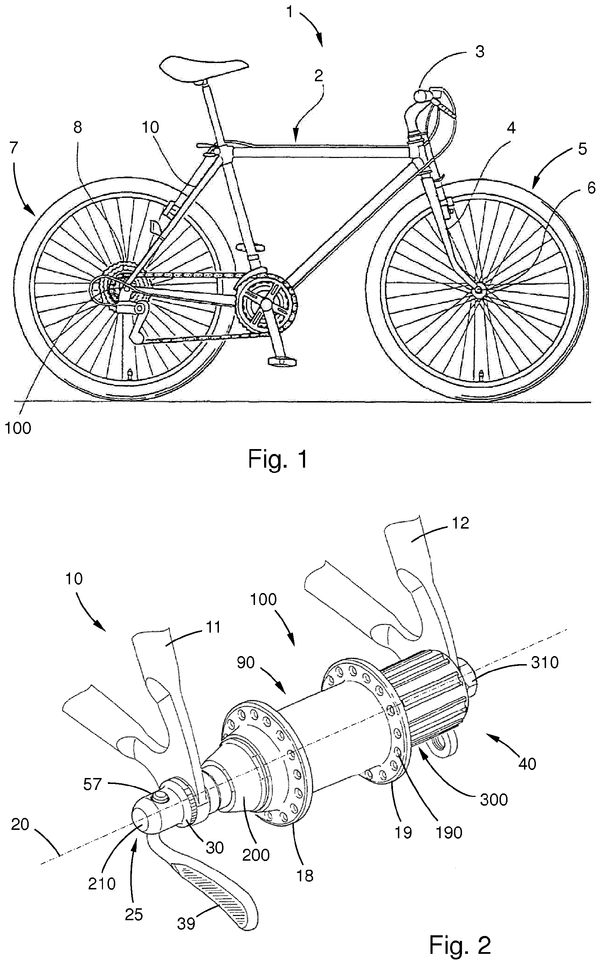

Figure 1 diagrammatically shows a bicycle 1 with a bicycle frame 2 to which a handlebar 3 is fastened at the front for steering a front fork 4 in which a front wheel 5 is arranged so as to be able to rotated by means of a front bicycle hub 6. The bicycle 1 also contains a rear wheel 7 which is driven by means of sprocket wheels 8 of a chain-drive system comprising a chain, a drive sprocket wheel and pedals 9. As illustrated in Figure 1, the rear wheel 7 is fitted in the rear fork 10 by means of a rear hub 90 for rotating around the rotation axis 20.

In the mounted state, the bicycle hub 6, 90 is fastened between a first blade 11 and a second blade 12 of a fork 4, 10, as can be seen in Figure 1 and 2. The bicycle hub 6, 90 is coaxially hollow and may comprise two conventional collars 18, 19 mounted to its opposite end parts in axial direction for securing the spokes of the wheel (see figure 2). Opposite end parts of the bicycle hub 90 in axial direction are fastened in the bicycle fork 10, in particular to opposite blades of the bicycle fork, for rotating about a rotation axis 20 in a generally known manner. The spokes 13 of the wheel are arranged on the outer circumference of the wheel hub 6, 90 in a conventional manner, using connecting members 190 on collars 18, 19.

As can be seen in Figure 2, the bicycle hub 6, 90 is fastened between the first and second blade 11, 12 by means of a through axle 25, which extends through an axial bore in the hub 90.

A first end part 210 of the through axle 25 is provided for connection to the first blade 11 by means of a first fastening member 30. A second end part 310 of the through axle opposite the first end part is provided for connection to the second blade 12 by means of a second fastening member 40. In the bicycle frame of the present invention, as a wheel rotation axle 25 use is made of a through axle which extends at least from the first end part 210 of the wheel hub 90 to the second end part 310, through an axial duct 15 present in the wheel hub. The through axle 25 is preferably made as one part, it may however also be made of two or more interconnected parts.

In an embodiment, the second end part 310 of the through axle is connected to the second blade 12 by means of a conventional, lever operated quick release coupling 39. To permit applying a desired degree of tension to the wheel hub 90 and axle 25, once one end part of the through axle 25 has been connected to the bicycle frame using the quick connect coupling 51, 52 of this invention, a required degree of tensioning may be applied along the other end part using means 30, 39 generally known to the skilled person. Such means may for example comprise a conventional quick release coupling with an eccentric tensioning member, in particular a lever operated eccentric quick-release skewer 39. Such a quick-release skewer 39 contains a lug or lever which is configured to cause an axial movement along the wheel's rotation axle 25 upon tightening of the lug, so that a certain retaining force for fastening of the modular bicycle hub can be achieved. The lug or lever 39 is moved along a hinged connection and closed to tighten the eccentric cam and secure the wheel 7 to the fork 10. Quick-release skewers are generally known to the skilled person, and many types thereof are commercially available. It is a suitable mechanism for applying a desired degree of tension to the conenction between the wheel and the bycicle fork and it permits removing a wheel from a bicycle frame and replacing it without requiring the use of tools, by opening and closing the cam lever 39 of the skewer. Note that the rotation axle 25 can also be put under tension using other means instead of the lever 39, for example by screwing a nut onto the corresponding threaded end of the rotation axle 25, which extends through an opening in an end part of the blade 10 and produces the same effect, but will probably be more time consuming.

According to another embodiment, both the first and second fastening member 30, 40 comprise a releasable quick connect coupling of this invention, comprising the co-operating insert part 51 and the receptacle part 52 as will be described below.

The first end part 210 of the through axle is connected to the relative blade 11, 12 by means of a quick connect coupling, which comprises a first insert part 51 which is provided to co-operate with a corresponding second receptacle part 52. At least part of the first insert part 51 is provided to be releasably received and held in a corresponding inner cavity or duct 62 of a second receptacle part 52 of the quick connect coupling. Access to the inner duct 62 is obtained through a duct opening or a duct entrance 80.

The first insert part 51 may be connected to or formed on an end part of the through axle 25 and extend axially from that end part. In that case the second receptacle part will be connected to the first or second blade, with the duct entrance 80 pointing towards the hub 90. In the present invention this embodiment is preferred because of the ease of manufacturing. The first insert part 51 may however also be provided for mounting to the first or second blade 11, 12, in such a way that it extends in axial direction of the through axle 25. In that case the second receptacle part will be connected to or formed on the through axle 25 and extend in axial direction from an end part thereof, the axis of the duct running parallel to the through axle axis.

The second receptacle part 52 may be mounted the first blade only or to both the first and the second blade 11, 12. The quick connect coupling described above is suitable for use with a fork of the front wheel alone, with a fork of the rear wheel alone or with both. Whether the receptacle part 52 is mounted to the left or right fork is irrelevant to the present invention, either of both may be chosen. Mounting may be carried out either directly or indirectly.

The second receptacle part 52 may be mounted to a side of the blade facing the wheel and the wheel hub with the inner duct opening facing the wheel or the hub 90. The second receptacle part 52 may also be mounted to a side of the blade 11, 12 pointing away from the wheel,or the hub 90 in which case the receptacle part 52 may extend from an outer part of the wheel. The second receptacle part may also be integrated into the blade 11, 12 with the inner duct opening facing the wheel. When connected, the first insert part 51 extends in axial direction from the through axle 25 towards and into the second receptacle part 52. In the present invention the means for fastening a wheel to the bicycle blade form part of the wheel axle and can be made integrally with it. As a result the strength, sturdiness and stability of the wheel axle may be improved, due to the reduced the number of connections.

In a preferred embodiment of this invention, the insert part 51 has a circular cross section and the inner duct of the second receptacle part has a corresponding circular cross section. This permits inserting the insert part in many positions. As a result, the co-operating first and second positioning members on the first insert part 51and second receptacle part 52 are arranged to be self centering. The insert part 51 may however also have an oval cross section, or a square cross section, or a 6 or 8 edged cross section and the inner duct of the second receptacle part may have a corresponding cross section. These shapes will however require specific positioning of the insert part in order for it to be insertabel into the receptacle part and will complicate assembly.

The first insert part 51 comprises a first positioning member 59, 53, 94 which is arranged to engage a corresponding second positioning member 56, 54, 95 of the second recpetacle part 52 in an engaging position. Upon engagement, the first and second positioning members provide an end position arranged to limit the extent of forward movement of the first insert part 51 into the second receptacle part 52. This way the position of the first receptacle part with respect to the second receptacle part is unambiguously defined when connected, and may be reproducibley established even when releasing and re-establishing the connection several times, at minimal risk to require re-adjustment of the tensioning of the axle. To permit releasing the connection, the first insert part 51 and the second receptacle part are provided to releasably engage each other.

Furthermore, the second receptacle part 52 comprises clamping means for exerting a releasable clamping force in circumferential direction of the first insert part. The clamping force may be exerted at one single position in length direction of the first insert part 51, or at several positions. The circumferential force may extend to the entire circumference of the insert part or to part of it only. Alternatively, the first insert part 51 may comprise clamping means for exerting a releasably clamping force to an inner face 152 of the inner duct 62 of the second receptacle part. According to still a further embodiment, the first insert part 51 and the second receptacle part 52 comprise mutually co-operating clamping means. The presence of the above described clamping means assist in fixing the position of the first insert part with respect to the second receptacle part, and in minimising the risk to the occurrence of variations therein during use.

The clamping means 54, 56, 91, 93, 81, 82, 83 may be provided for automatic activation by engagement of the positioning members 59, 56, 53, 82, 83 69. The clamping means may however also be provided for manual activation.

In the connected position, a clamping force is exerted to an outer face of the first insert part along at least part of the circumference thereof. In a preferred embodiment, the clamping means may be arranged on an inner face of the inner duct of the receptacle part to exert a radially extending clamping force to at least part of the circumference of the outer circumferential face insert part 51. The co-operating positioning members form an end position to stop the movement of the insert part and limit the extent of axial movement of the first insert part 51 into the second receptacle part 52 during assembly. Due to the presence of this stop, the insert part 51 will always take the same position in the connected state, and therefore the position of the wheel with respect to the relative blade will always be the same. This is an important advantage as it permits minimising the number of actions that need to be carried out to connect a wheel to the corresponding blade. Releasing the insert part 51 from the cavity 62 of the receptacle part may be achieved by a release mechanism which is arranged to release the clamping force exerted by the receptacle part 52.

In a practical embodiment the connection between the first insert part 51 and the second receptacle part 52 is established by inserting the first insert part 51 in axial direction into the corresponding cavity 62 of the second receptacle part 52, moving the insert part 51 in axial direction in duct or cavity 62 until the positioning member therein engages the corresponding positioning member on the first insert part 51, so as to position the insert part 51 in a preset connected position in cavity 62 of the receptacle part 52. After the connection has been established, the insert part 51 and receptacle part extend in axial direction along the axle 25. Because the wheel axle as well as the members for connecting the wheel axle to the blades all extend from each other in axial direction of the wheel axle, the strength and stability of the connection may be optimised.

Moreover, as the first insert part and the second receptacle part 51, 52 are arranged to be assembled in axial direction, insertion of the wheel between the blades may be carried out in any direction and is not limited by the presence of guiding members which release the wheel in a certain direction.

An elasticity of the arms or blades 11 and 12 of the rear fork (but also of the front fork) can form part of these means, to render them individually slightly elastically flexible and facilitate to move the two arms 11 and 12 slightly apart, with minimum force, in order to remove the rear wheel from the bicycle frame once the rotation axle 25 has been withdrawn. Instead of relying on the elasticity of the arms or blades 11 and 12, specific means can be provided for permitting the arms 11 and/or 12 to be spaced apart somewhat. For example, a proper cylindrical hinge can be provided on one of the two arms 11 and 12, having its axis perpendicular to the rotation axle 25. This hinge enables, by rotating the terminal part of the arm 12 slightly outwards, the easy disengagement of the two ends of the wheel hub from the sprocket heel hub and the disc brake hub if the lever 39 is moved to its position of releasing the rotation axle 25, the insert part is released from the receptacle part and the rotation axle 25 is withdrawn.

Within the scope of the present invention a wide variety of releasable quick connect couplings or quick coupling connectors may be used. Quick coupling connectors are well known to the skilled person. Operated by hand, quick connect couplings replace threaded or flanged connections, which require wrenchers, and they are commercially available from Parker©, Ingersoll Rand©, Swagelock© and others. An advantage of the use of a quick connect coupling is that they contain a simple release mechanism, no tools or machines are needed to establish or release the connection of the insert and receptacle part of the coupling and that the connection can be established and controlled by hand. Having full control over the connecting and disconnecting action ensures the absence of the risk to a possible slip of a button, and less man power is needed. The connection is capable of withstanding large mechanical forces and torque, which is of particular importance with bicycles and certainly at the position of the rear wheel which is the driving wheel. An additional advantage of the use of a quick connect coupling such as the one used in the present invention is that the position of the insert part with respect to the receptacle part in the connected position is unambiguously defined by the corresponding positioning members and is fixed, as a result of which tensioning of the through axle may be reproducibly restored by re-establishing the coupling, after it had been released to for example change the wheel.

In a practical embodiment the connection between the first insert part 51 and the second receptacle part 52 is established by inserting the first insert part 51 in axial direction into the corresponding cavity 62 of the second receptacle part 52. This may be achieved by moving the through axle 25 with the insert part 51 mounted to it, in axial direction towards and into in duct or cavity 62 of the receptacle part on blade 11, 12, until the positioning member of the insert part 51 engages the corresponding positioning member on the receptacle part 52, so as to position the insert part 51 in a preset connected position in cavity 62 of the receptacle part 52. After the connection has been established, the insert part 51 and receptacle part extend in axial direction along the axle 25. Because the wheel axle as well as the members 51, 52 for connecting the wheel axle 25 to the blades 11, 12 all extend from each other in axial direction of the wheel axle, and because establishing the connection requires a translational movement along the axis of the through axle only, mounting of a wheel requires subjecting the through axle to a simple axial movement. Thereby no further rotation about the axis of the through axle 25 is needed, so that the risk to unwanted torque and a possible deformation of the axle therewith may be minimised, as well as the risk to damaging other parts of the bicylce mounted to a side of the blades facing the wheel like disc brakes or sprocket wheels. This also permits optimising strength and stability of the connection, and permits minimising the number of actions needed to establish the connection, and thereby shortens the time to establish the connection.

The insert part 51 and receptacle part 52 may be easily disconnected without tools by actuating the release mechanism on an outer part of the receptale part or on the blade, followed by disengaging the locking mechanism provided in the quick connect coupling and separating the parts. Connection between the insert part 51 and receptacle part 52 may usually be established by inserting the insert part 51 in the duct of the receptacle part and moving the insert part into the duct 62 until the positioning member on the outer face of the insert part and on the inner face of the duct 62 of the receptacle part engage each other. Usually this involves a simple quick push action, separation may be achieved by a combined push/pull action.

In order to remove the bicycle's rear wheel, with the conventional lever operated quick release coupling, the threaded nut may be removed or the lever 39 may be moved to the position that allows the roation axle 25 to be released. With the present invention, a wheel may simply be removed by releasing the clamping force excerted by the receptacle part 52 to the release part, and by moving the lever or lug from the closed position to a release position. Remarkt that varying of the tensioning by rotation of the through axle is not necessary. This enables rotation axle 25 to be withdrawn from the hub 28 and the wheel can be removed from the frame. Whether the skewer or lug 39 is released first or the quick connect coupling 51, 52 is released first or only the quick connect coupling 51, 52 is released when removing the wheel is not critical to the invention. The rotation axle 25, the lever 39, the insert part 51 and receptacle part 52 essentially constitute the means that enable a positive-locking fit of the rotation axle 25 to the bicycle frame to be established when the rotation axle 25 is under tension, and to nullify said positive-locking fit when the rotation axle 25 is released.

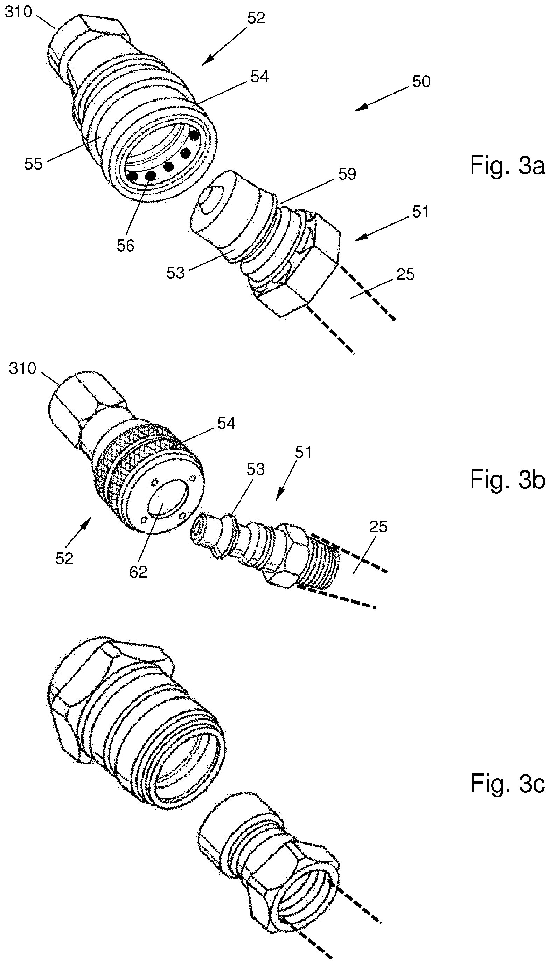

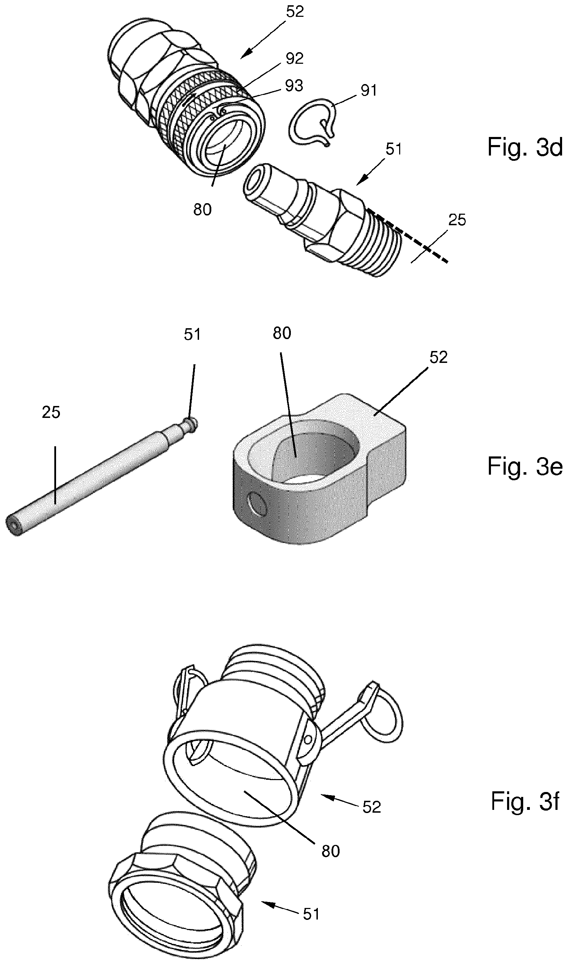

Examples of quick connect couplings suitable for use with the present invention include those shown in fig. 3a-e.

A ball-lock coupling such as the one shown in fig. 3a is a commonly used type. Several balls 56 are positioned in corresponding positioning holes provided in a circumferential recess in the interior of the receptacle part 52. The holes are usually tapered or stepped to reduce their diameter at the inner surface of receptacle part 52 relative to their diameter distal from the inner surface of the receptacle part, with the purpose of restraining any movement of a ball 56 within its corresponding hole, when the inner cavity 62 of the receptacle part 52 is cavity vacated by the insert part 51 when the coupling is disconnected. When inserting the insert part 51 into the inner cavity 62 of the receptacle part 52, the balls 56 are displaced towards and into the wall of the receptacle part 52. The balls are provided to exert a clamping force to at least part 59 of a corresponding part of a radial outer surface of the insert part 51.

A spring-loaded sleeve 54 around the outer surface 55 of the receptacle part 52 forces the balls 56 toward the insert part 51. To connect the insert part 51, the sleeve 54 is pushed back, which opens a clearance so the balls are free to move in outward direction towards the wall of the receptacle part 52. Once the insert part 51 is in place, releasing the sleeve 54 forces the balls inward against a locking groove 59 on the outer face of the insert part 51. To disconnect, pushing the sleeve 54 back provides the balls 56 with clearance to move outward and allow the plug to be removed. In this embodiment, balls 56, groove 59 function as positioning means, and balls 56, groove 59 and sleeve 54 co-operate to provide clamping means.

A roller-lock coupling is shown in figure 3b. Such a coupling makes use of locking rollers or pins spaced end-to-end in grooves or slots around the insert part 51. As the insert part is inserted, a ramp on the insert part outer surface pushes the rollers outward. Once the insert part 51 is inserted the prescribed distance, the rollers slip into a retention groove on the outer surface of the insert part. Retracting the locking sleeve 54, which allows the ramp on the outer surface of the insert part to move the rollers outward, and releases the insert part.

A pin-lock coupling is shown in Figure 3c. This type of coupling allows the push-to-connect joining of the insert part 51 and receptacle part 52 to be carried out using only one hand because the outer sleeve 54 does not need to be retracted to make a connection. In this type of coupling, pins are mounted around the insert part inner diameter in a truncated-cone-shaped formation. Pushing the insert part into the receptacle part moves pins back and in axially outward of the receptacle part, by the action of a ramp on the insert part. Shear across pins locks the insert part into the receptacle part. Retracting the spring loaded sleeve, which forces the pins back out of the locking groove, releases the insert part from the receptacle part.

A ring-lock coupling is shown in figure 3d. A ring coupling makes use of a split ring seated in a groove and slot in the receptacle part. Pushing the receptacle part 52 into position causes a ramp on the receptacle part 52 to spread the ring 91 apart at the split until the ring snaps closed behind a retention shoulder 93 on the receptacle part. Rotating an external sleeve 92 expands the ring, thus releasing it from the retention shoulder so the halves can be pulled apart. A variation of this design uses jaws instead of a split ring to lock the parts together.

Another preferred embodiment shown in figure 3d makes use of a leaf spring coupling, wherein one or more leaf springs are positioned in a grooves or slots around the inner cavity 62 of the receptacle part 52. With the insert part 51 not inserted, the leaf spring extends into the inner cavity 62 of the receptacle part. As the insert part 51 is inserted, a ramp on the insert part outer surface pushes the leaf spring into a corresponding housing in the receptacle part 52. Once the insert part 51 is inserted the prescribed distance, the leaf spring slips into a retention groove 79 on the outer face 58 of the insert part 51. Retracting the locking sleeve 54 by actuating the relase mechanism 64 allows the ramp on the outer surface of the insert part to move the leaf spring outward and into the receptacle part, and releases the insert part. The use of a leaf spring coupling is preferred in the present invention, as the tensioning of the leaf can be adapted and thereby permits to adapt the force needed to release the coupling. In this embodiment, the leaf spring and corresponding groove on the insert part form co-operating positioning members and clamping means.

In a cam-lock coupling such as the one shown in figure 3f, the insert part is inserted into the receptacle part when two external levers are folded back against the sides of the receptacle part. These are most common in larger sizes and generally require more spaces than comparable couplings of the same size.

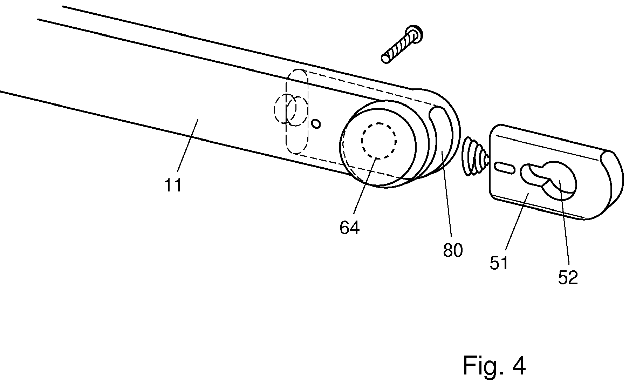

In general, a release member for causing the quick release coupling to be disconnected will be provided on the receptacle part 52 (see figure 3a-e and fig. 4).

Fig. 4 shows a detailed view to a blade 11 having the receptacle part 52 of the present invention integrated therein. It shall be clear that the receptaclepart 52 can also be integrated into the second blade 12. An end part 151 of blade 11 comprises a sleeve 151 for accomodating an insert member 155 comprising the receptacle part 52, with an axial inner duct 62. To facilitate mounting of insert member 155, member 155 is mounted against a bias spring, forcing the insert member 155 in the direction of the sleeve access, to ensure that entrance opening 80 of inner duct 62 is always located at the position of the corresponding opening 155 in the relative blade 11, 12 .

The present invention further relates to a bicycle comprising a bicycle frame as described above.

The present invention also relates to a through axle comprising a first insert part (51), which extends in axial direction from the first end part of the through axle (25), and a positioning member as part of the bicycle frame as described above.

The present invention furhter relates to an assembly of a through axle with an axially extending first insert part 51 and a second receptacle part with an axially extending inner duct 62 for receiving the first insert part, wherein one of the first insert part 51 and second receptacle part 52 is mounted to the first blade 11, and the other one of the first insert part and second receptacle part is mounted to the first end part of the through axle as part of the bicycly frame as described above.

## Claims

1. A bicycle frame (2) comprising at least one fork (4, 10) with opposite first and second blades (11, 12), a wheel hub (90) received between the opposite first and second blades (11, 12), which wheel hub comprises an axial duct (15) for receiving a through axle (25) in axial direction there through, wherein a first end part (210) of the through axle (25) is provided for connection to the first blade (11) by means of a first fastening member (30), and a second end part (310) of the through axle (25) opposite the first end part is provided for connection to the second blade (11) by means of a second fastening member (40), wherein the first fastening member (30) comprises a releasable quick connect coupling (50), which quick connect coupling (50) comprises an axially extending first insert part (51) provided to be received in an axially extending inner duct (62) of a second receptacle part (52), wherein the first insert part (51) comprises a first positioning member (59, 53, 94) which is arranged to engage a corresponding second positioning member (56, 54, 95) of the second receptacle part (52) in an engaging position to provide an end position arranged to limit the extent of forward movement of the first insert part (51) into the second receptacle part (52), wherein the second receptacle part (52) comprises clamping means for exerting a releasable clamping force, wherein the first insert part and the second receptacle part (51, 52) are arranged to be assembled in axial direction of the through axle (25), and **characterized in that** said quick connect coupling (50) is either:
a ball-lock coupling wherein the inner duct of the second receptacle part (52) has an inner wall comprising several balls (56) positioned in corresponding positioning holes in a circumferential recess in the inner wall, a retractable spring-loaded sleeve (54) around the outer surface (55) of the second receptacle part (52) being provided to force the balls (56) toward the first insert part (51), the balls being provided to exert a clamping force to the first insert part (51), or
a leaf spring coupling, comprising a retractable leaf spring received in the inner circumferential wall of the inner duct of the second receptacle part (52), wherein the leaf spring extends along at least part of the circumference of the inner duct, a retractable spring-loaded sleeve (54) around the outer surface (55) of the second receptacle part (52) being provided to force the leaf spring toward the first insert part (51) in the connected position of the first insert part (51) and the second receptacle part (52), the leaf spring being provided to exert a clamping force to at least part of an outer face of the first insert part (51).

2. A bicycle frame according to claim 1, wherein the first insert part (51) is mounted to the first end part of the through axle (25) and the second receptacle part (52) is mounted on a side of the first blade (11) facing the wheel hub (90), in such a way that an entrance (80) of the inner duct (62) faces the wheel hub (90).

3. A bicycle frame according to claim 1 or 2, wherein the second receptacle part (52) is provided to exert a clamping force in radial direction of the first insert part (51) to at least part of the circumference of an outer face of the first insert part (51).

4. A bicycle frame according to claim 3, wherein the first and second positioning members in the engaging position are arranged to activate the clamping means to exert the clamping action.

5. A bicycle fame according to any of the previous claims, wherein the first insert part (51) and second receptacle part (52) are arranged to be self-centering.

6. A bicycle frame according to any of the previous claims, wherein the first insert part (51) has a circular cross section and the inner duct of the second receptacle part (52) has a corresponding circular cross section.

7. A bicycle frame according to any of the previous claims, wherein the second receptacle part (52) is mounted to a side of the first blade (11, 12) facing the wheel hub, in such a way that the entrance (80) of the inner duct (62) of the second receptacle part (52) for inserting the first insert part (51) into the inner duct, faces the wheel hub.

8. A bicycle frame according to any one of claims 1-5, wherein the second receptacle part (52) is mounted to a side of the first blade (11) pointing away from the wheel hub, in such a way that an entrance (80) of the inner cavity (62) of the second receptacle part (52) for inserting the first insert part (51) faces the wheel hub.

9. A bicycle frame according to any one of claims 1-5, wherein the second receptacle part (52) is integrated in the first blade in such a way that an entrance (80) of the inner cavity (62) for inserting the first insert part (51) faces the wheel hub.

10. A bicycle frame according to any of the previous claims, wherein each of the first and second blade comprise at a free end part (60, 160) thereof a hole (61, 161) for accommodating respectively the opposite first and second end part (210, 310) of the through axle (25).

11. A bicycle frame according to any of the previous claims, wherein a release member (54) for causing the clamping force exerted by the second receptacle part (52) to be released to permit disconnecting the first insert part (51) and the second receptacle part (52), is provided on an outer side of the second receptacle part (52).

12. A bicycle frame according to any of the previous claims, wherein a release member (54) for causing the clamping force exerted by the second receptacle part (52) to be released to permit disconnecting the first insert part (51) and the second receptacle part (52), is mounted to a free end part of the first blade (60) to which the second receptacle part (52) is mounted.

13. A bicycle frame according to any of the previous claims, wherein a second end part of the through axle (25) opposite the first end part comprising the quick connect coupling member (51, 52), comprises a lever operated, eccentric quick release coupling member (30, 39) with a tensioning member (39) to permit releasably connecting the wheel to the second blade (12) with a required variable amount of tension.

## Patentansprüche

1. Fahrradrahmen (2), mindestens eine Gabel (4, 10) mit gegenüberliegendem erstem und zweitem Holm (11, 12), eine Radnabe (90), die zwischen dem ersten und dem zweiten gegenüberliegenden Holm (11, 12) aufgenommen ist, umfassend, wobei die Radnabe einen axialen Kanal (15) zur Aufnahme einer Steckachse (25) in axialer Richtung durch ihn hindurch umfasst, wobei ein erster Endteil (210) der Steckachse (25) für die Verbindung mit dem ersten Holm (11) mittels eines ersten Befestigungselements (30) bereitgestellt ist und ein zweiter Endteil (310) der Steckachse (25) gegenüber dem ersten Endteil für die Verbindung mit dem zweiten Holm (11) mittels eines zweiten Befestigungselements (40) bereitgestellt ist, wobei das erste Befestigungselement (30) eine lösbare Schnellverbindungskupplung (50) umfasst, wobei die Schnellverbindungskupplung (50) einen sich axial erstreckenden ersten Einsatzteil (51) umfasst, der bereitgestellt ist, um in einem sich axial erstreckenden inneren Kanal (62) eines zweiten Aufnahmeteils (52) aufgenommen zu werden, wobei der erste Einsatzteil (51) ein erstes Positionierungselement (59, 53, 94) umfasst, das dafür angeordnet ist, mit einem entsprechenden zweiten Positionierungselement (56, 54, 95) des zweiten Aufnahmeteils (52) in einer Eingriffsposition in Eingriff zu gelangen, um eine Endposition bereitzustellen, die dafür angeordnet ist, das Ausmaß von Vorwärtsbewegung des ersten Einsatzteils (51) in den zweiten Aufnahmeteil (52) zu beschränken, wobei der zweite Aufnahmeteil (52) Klemmmittel zum Ausüben einer lösbaren Klemmkraft umfasst, wobei der erste Einsatzteil und der zweite Aufnahmeteil (51, 52) dafür angeordnet sind, in axialer Richtung der Steckachse (25) zusammengefügt zu werden, und **dadurch gekennzeichnet, dass** die Schnellverbindungskupplung (50) entweder
eine Kugelsperrkupplung ist, wobei der innere Kanal des zweiten Aufnahmeteils (52) eine Innenwand aufweist, die mehrere Kugeln (56) umfasst, die in entsprechenden Positionierungsöffnungen in einer umlaufenden Vertiefung in der Innenwand positioniert sind, wobei eine zurückziehbare federbelastete Hülse (54) um die Außenfläche (55) des zweiten Aufnahmeteils (52) bereitgestellt ist, um die Kugeln (56) zum ersten Einsatzteil (51) zu zwingen, wobei die Kugeln bereitgestellt sind, um eine Klemmkraft auf den ersten Einsatzteil (51) auszuüben, oder
eine Blattfederkupplung, die eine zurückziehbare Blattfeder umfasst, die in der innen umlaufenden Wand des inneren Kanals des zweiten Aufnahmeteils (52) aufgenommen ist, wobei sich die Blattfeder entlang mindestens eines Teil des Umfangs des inneren Kanals erstreckt, wobei eine zurückziehbare federbelastete Hülse (54) um die Außenfläche (55) des zweiten Aufnahmeteils (52) bereitgestellt ist, um die Blattfeder zum ersten Einsatzteil (51) in die verbundene Position des ersten Einsatzteils (51) und des zweiten Einsatzteils (52) zu zwingen, wobei die Blattfeder bereitgestellt ist, um eine Klemmkraft auf mindestens einen Teil einer Außenfläche des ersten Einsatzteils (51) auszuüben.

2. Fahrradrahmen nach Anspruch 1, wobei der erste Einsatzteil (51) an den ersten Endteil der Steckachse (25) montiert ist und der zweite Aufnahmeteil (52) an eine Seite des ersten Holms (11) der Radnabe (90) zugewandt derart montiert ist, dass ein Eingang (80) des inneren Kanals (62) zur Radnabe (90) weist.

3. Fahrradrahmen nach Anspruch 1 oder 2, wobei der zweite Aufnahmeteil (52) bereitgestellt ist, um eine Klemmkraft in radialer Richtung des ersten Einsatzteils (51) auf mindestens einen Teil des Umfangs einer Außenfläche des ersten Einsatzteils (51) auszuüben.

4. Fahrradrahmen nach Anspruch 3, wobei das erste und das zweite Positionierungselement in der Eingriffsposition dafür angeordnet sind, die Klemmmittel zum Ausüben der Klemmwirkung zu aktivieren.

5. Fahrradrahmen nach einem der vorhergehenden Ansprüche, wobei der erste Einsatzteil (51) und der zweite Aufnahmeteil (52) dafür angeordnet sind, selbstzentrierend zu sein.

6. Fahrradrahmen nach einem der vorhergehenden Ansprüche, wobei der erste Einsatzteil (51) einen kreisförmigen Querschnitt aufweist und der innere Kanal des zweiten Aufnahmeteils (52) einen entsprechenden kreisförmigen Querschnitt aufweist.

7. Fahrradrahmen nach einem der vorhergehenden Ansprüche, wobei der zweite Aufnahmeteil (52) zur Radnabe weisend derart an eine Seite des ersten Holms (11, 12) montiert ist, dass der Eingang (80) des inneren Kanals (62) des zweiten Aufnahmeteils (52) zum Einsetzen des ersten Einsatzteils (51) in den inneren Kanal zur Radnabe weist.

8. Fahrradrahmen nach einem der Ansprüche 1 bis 5, wobei der zweite Aufnahmeteil (52) von der Radnabe wegweisend derart an eine Seite des ersten Holms (11) montiert ist, dass ein Eingang (80) des inneren Hohlraums (62) des zweiten Aufnahmeteils (52) zum Einsetzen des ersten Einsatzteils (51) zur Radnabe weist.

9. Fahrradrahmen nach einem der Ansprüche 1 bis 5, wobei der zweite Aufnahmeteil (52) derart in den ersten Holm integriert ist, dass ein Eingang (80) des inneren Hohlraums (62) zum Einsetzen des ersten Einsatzteils (51) zur Radnabe weist.

10. Fahrradrahmen nach einem der vorhergehenden Ansprüche, wobei der erste und der zweite Holm an ihrem freien Endteil (60, 160) jeweils eine Öffnung (61, 161) umfassen, um den ersten beziehungsweise den gegenüberliegenden zweiten Endteil (210, 310) der Steckachse (25) unterzubringen.

11. Fahrradrahmen nach einem der vorhergehenden Ansprüche, wobei an einer Außenseite des zweiten Aufnahmeteils (52) ein Freigabeelement (54) bereitgestellt ist, um das Freigeben der Klemmkraft zu bewirken, die durch den zweiten Aufnahmeteil (52) ausgeübt wird, um ein Trennen des ersten Einsatzteils (51) und des zweiten Aufnahmeteils (52) zu ermöglichen.

12. Fahrradrahmen nach einem der vorhergehenden Ansprüche, wobei an einen freien Endteil des ersten Holms (60), an den der zweite Aufnahmeteil (52) montiert ist, ein Freigabeelement (54) montiert ist, um das Freigeben der Klemmkraft zu bewirken, die durch den zweiten Aufnahmeteil (52) ausgeübt wird, um ein Trennen des ersten Einsatzteils (51) und des zweiten Aufnahmeteils (52) zu ermöglichen.

13. Fahrradrahmen nach einem der vorhergehenden Ansprüche, wobei ein zweiter Endteil der Steckachse (25) gegenüber dem ersten Endteil, welcher das Schnellverbindungskupplungselement (51, 52) umfasst, ein hebelbetätigtes, exzentrisches Schnellverbindungskupplungselement (30, 39) mit einem Spannelement (39) umfasst, um das lösbare Verbinden des Rades mit dem zweiten Holm (12) mit einem erforderten variablen Umfang von Spannung zu ermöglichen.

## Revendications

1. Cadre de bicyclette (2) comportant au moins une fourche (4, 10) avec de premier et second fourreaux opposés (11, 12), un moyeu de roue (90) reçu entre les premier et second fourreaux opposés (11, 12), lequel moyeu de roue comprend un conduit axial (15) pour recevoir un axe traversant (25) dans une direction axiale à travers celui-ci, dans lequel une première partie d'extrémité (210) de l'axe traversant (25) est prévue pour le raccordement au premier fourreau (11) au moyen d'un premier élément de fixation (30), et une seconde partie d'extrémité (310) de l'axe traversant (25) opposée à la première partie d'extrémité est prévue pour le raccordement au second fourreau (11) au moyen d'un second élément de fixation (40), dans lequel le premier élément de fixation (30) comprend un raccord rapide amovible (50), ledit raccord rapide (50) comprend une première partie d'insert s'étendant axialement (51) prévue pour être reçue dans une cavité intérieure s'étendant axialement (62) d'une seconde partie de réceptacle (52), dans lequel la première partie d'insert (51) comprend un premier élément de positionnement (59, 53, 94) qui est agencé pour venir en prise avec un second élément de positionnement correspondant (56, 54, 95) de la seconde partie de réceptacle (52) dans une position de mise en prise pour fournir une position d'extrémité agencée de façon à limiter l'étendue du mouvement vers l'avant de la première partie d'insert (51) dans la seconde partie de réceptacle (52), dans lequel la seconde partie de réceptacle (52) comprend un moyen de serrage pour exercer une force de serrage relâchable, dans lequel la première partie d'insert et la seconde partie de réceptacle (51, 52) sont agencées pour être assemblées dans une direction axiale de l'axe traversant (25), et **caractérisé en ce que** ledit raccord rapide (50) est soit :
un accouplement à verrouillage à billes dans lequel la cavité intérieure de la seconde partie de réceptacle (52) comporte une paroi intérieure comportant plusieurs billes (56) positionnées dans des trous de positionnement correspondants dans un évidement circonférentiel dans la paroi intérieure, un manchon à ressort rétractable (54) autour de la surface extérieure (55) de la seconde partie de réceptacle (52) étant prévu pour forcer les billes (56) vers la première partie d'insert (51), les billes étant prévues pour exercer une force de serrage sur la première partie d'insert (51), ou
un accouplement à ressort à lame, comportant un ressort à lame rétractable reçu dans la paroi circonférentielle intérieure de la cavité intérieure de la seconde partie de réceptacle (52), dans lequel le ressort à lame s'étend le long d'au moins une partie de la circonférence du conduit intérieur, un manchon à ressort rétractable (54) autour de la surface extérieure (55) de la seconde partie de réceptacle (52) étant prévu pour forcer le ressort à lame vers la première partie d'insert (51) dans la position de raccordement de la première partie d'insert (51) et de la seconde partie de réceptacle (52), le ressort à lame étant prévu pour exercer une force de serrage sur au moins une partie d'une face extérieure de la première partie d'insert (51).

2. Cadre de bicyclette selon la revendication 1, dans lequel la première partie d'insert (51) est montée sur la première partie d'extrémité de l'axe traversant (25) et la seconde partie de réceptacle (52) est montée sur un côté du premier fourreau (11) tourné vers le moyeu de roue (90), de manière à ce que l'entrée (80) de la cavité intérieure (62) soit face au moyeu de roue (90).

3. Cadre de bicyclette selon la revendication 1 ou 2, dans lequel la seconde partie de réceptacle (52) est prévue pour exercer une force de serrage dans la direction radiale de la première partie d'insert (51) sur au moins une partie de la circonférence d'une face extérieure de la première une partie insert (51).

4. Cadre de bicyclette selon la revendication 3, dans lequel les premier et second éléments de positionnement dans la position de mise en prise sont agencés pour activer le moyen de serrage pour exercer l'action de serrage.

5. Cadre de bicyclette selon l'une quelconque des revendications précédentes, dans lequel la première partie d'insert (51) et la seconde partie de réceptacle (52) sont agencées de manière à être auto-centreuses.

6. Cadre de bicyclette selon l'une quelconque des revendications précédentes, dans lequel la première partie d'insert (51) présente une section transversale circulaire et la cavité intérieure de la seconde partie de réceptacle (52) présente une section transversale circulaire correspondante.

7. Cadre de bicyclette selon l'une quelconque des revendications précédentes, dans lequel la seconde partie de réceptacle (52) est montée sur un côté du premier fourreau (11, 12) tourné vers le moyeu de roue, de manière à ce que l'entrée (80) de la cavité intérieure (62) de la seconde partie de réceptacle (52) pour insérer la première partie d'insert (51) dans la cavité intérieure soit face au moyeu de roue.

8. Cadre de bicyclette selon l'une quelconque des revendications 1 à 5, dans lequel la seconde partie de réceptacle (52) est montée sur un côté du premier fourreau (11) situé à l'opposé du moyeu de roue, de telle sorte qu'une entrée (80) de la cavité intérieure (62) de la seconde partie de réceptacle (52) pour insérer la première partie d'insert (51) est face au moyeu de roue.

9. Cadre de bicyclette selon l'une quelconque des revendications 1 à 5, dans lequel la seconde partie de réceptacle (52) est intégrée dans le premier fourreau de telle sorte qu'une entrée (80) de la cavité intérieure (62) pour insérer la première partie d'insert (51) est face au moyeu de roue.

10. Cadre de bicyclette selon l'une quelconque des revendications précédentes, dans lequel chacun des premier et second fourreaux comporte sur une partie d'extrémité libre (60, 160) de ceux-ci, un trou (61, 161) pour recevoir respectivement les première et seconde parties d'extrémité opposées (210, 310) de l'axe traversant (25).

11. Cadre de bicyclette selon l'une quelconque des revendications précédentes, dans lequel un élément de libération (54), pour amener la force de serrage exercée par la seconde partie de réceptacle (52) à être relâchée pour permettre la déconnexion de la première partie d'insert (51) et de la seconde partie de réceptacle (52), est prévu sur un côté extérieur de la seconde partie de réceptacle (52).

12. Cadre de bicyclette selon l'une quelconque des revendications précédentes, dans lequel un élément de libération (54), pour amener la force de serrage exercée par la seconde partie de réceptacle (52) à être relâchée pour permettre la déconnexion de la première partie d'insert (51) et de la seconde partie de réceptacle (52), est monté sur une partie d'extrémité libre du premier fourreau (60) sur lequel la seconde partie de réceptacle (52) est montée.

13. Cadre de bicyclette selon l'une quelconque des revendications précédentes, dans lequel une seconde partie d'extrémité de l'axe traversant (25) opposée à la première partie d'extrémité comportant l'élément de raccord rapide (51, 52) comprend un élément de raccord rapide excentrique actionné par levier (30, 39) avec un élément de tension (39) pour permettre le raccordement de manière amovible de la roue au second fourreau (12) avec une quantité de tension variable souhaitée.
